# EUROPEAN PATENT SPECIFICATION

(11) **EP 1 426 207 B1**
(45) Date of publication and mention of the grant of the patent: **14.03.2007**
(21) Application number: 03104477.9
(22) Date of filing: 01.12.2003
(51) Int. Cl.: B60G 17/005, B60G 17/015, B60G 9/02, E02F 9/02, B66C 23/36

(54) **A wheeled vehicle provided with a rotating turret**
Radfahrzeug mit einem Drehturm
Véhicule roulant équipé d'une tourelle tournante

(30) Priority: 06.12.2002 IT TO20021068
(43) Date of publication of application: 09.06.2004
(73) Proprietor: Fiat Kobelco Construction Machinery S.p.A., 10099 San Mauro Torinese (Torino) (IT)
(72) Inventor: Lovato, Ivo, 10030 Tonengo di Mazze' (TO) (IT)
(74) Representative: CNH IP Department

(56) References cited:
- EP-A- 0 003 939
- EP-A- 0 266 785
- EP-A- 0 404 690
- GB-A- 2 010 193
- US-A- 3 349 932
- US-A- 5 388 857
- PATENT ABSTRACTS OF JAPAN vol. 015, no. 053 (M-1079), 7 February 1991 (1991-02-07) & JP 02 285114 A (KOMATSU LTD), 22 November 1990 (1990-11-22)
- PATENT ABSTRACTS OF JAPAN vol. 2000, no. 11, 3 January 2001 (2001-01-03) -& JP 2000 229509 A (HITACHI CONSTR MACH CO LTD), 22 August 2000 (2000-08-22)
- PATENT ABSTRACTS OF JAPAN vol. 2002, no. 02, 2 April 2002 (2002-04-02) -& JP 2001 287529 A (HITACHI CONSTR MACH CO LTD), 16 October 2001 (2001-10-16)
- PATENT ABSTRACTS OF JAPAN vol. 2000, no. 08, 6 October 2000 (2000-10-06) -& JP 2000 127730 A (KOMATSU LTD), 9 May 2000 (2000-05-09)
- PATENT ABSTRACTS OF JAPAN vol. 2000, no. 19, 5 June 2001 (2001-06-05) & JP 2001 047834 A (NISSAN DIESEL MOTOR CO LTD), 20 February 2001 (2001-02-20)

## Description

The present invention relates to a wheeled vehicle provided with an oscillating axle, and in particular to an earth-moving vehicle.

As known in the art, earth-moving vehicles on wheels in general comprise a bottom chassis and a top chassis or turret, which is coupled to the bottom chassis by means of a thrust bearing for rotating about a vertical axis. The turret normally is equipped with a driving cab and an operating arm. The bottom chassis is coupled to the front wheels by means of a front axle, which is in general able to oscillate with respect to the bottom chassis about a longitudinal axis of the vehicle.

Oscillation of the front axle enables the vehicle to adapt to the irregularities of the terrain during its displacements so that the four wheels of the vehicle remain in contact with the ground during travelling conditions. Front axle oscillation however can be disabled by means of a manual command issued by the driver, which blocks two hydraulic cylinders that are carried by the bottom chassis and are provided with respective rods, each of which is coupled to a corresponding axle shaft. In particular, oscillation of the axle must necessarily be disabled when the vehicle carries out operations of digging and when the rotation of the top chassis and thus of the operating arm about the vertical axis, with respect to the longitudinal axis of the vehicle, becomes greater than a safety angle, beyond which the vehicle risks turning over.

The known solution just described is far from satisfactory, in as much as the risks of the vehicle turning over during digging operations are relatively high. In fact, the switching of the control for blocking and releasing the cylinders is carried out by the driver only on the basis of his own experience, his own sensitivity, and his own promptness in identifying the possible risks of turning over due to a rotation of the chassis beyond the aforesaid safety angle.

In addition, during digging operations, the driver not only has to switch blocking and release of the axle manually, but must also brake the wheels using a corresponding brake pedal, so that it is far from convenient to activate and deactivate two controls repeatedly, i.e. the one for blocking the cylinders and the one for braking, especially when the vehicle has to carry out various operations of digging and of displacement alternately with respect to one another, as commonly occurs on worksites where digging operations are carried out.

In EP-A-0.266.785, which is considered to be the closest prior art, it is already proposed to automatically block oscillation of a front axle upon a rotating turret reaching a certain angle. The system however relies on a mechanical cam arrangement coupled to electrical switches. As a result, if the electrical system fails, then the turret could move beyond a safety angle without any action being taken with respect to the oscillating front axle.

EP-A-0.404.690 proposes to couple the braking system of a shovel vehicle to a suspension locking device.

The purpose of the present invention is therefore to provide a wheeled vehicle equipped with an oscillating axle, which will enable the problems outlined above to be solved in a simple and economically advantageous way.

According to the present invention, a wheeled vehicle is provided, comprising:
- a bottom chassis;
- a top chassis, coupled to said bottom chassis in a manner as to be able to turn about a vertical axis and equipped with an operating arm;
- an axle, coupled to said bottom chassis for oscillating movement about a longitudinal axis of the vehicle;
- blocking means, provided between said bottom chassis and said axle and operable, when activated, to angularly block said axle about said longitudinal axis with respect to said bottom chassis; and
- control means for activating said blocking means and inhibiting oscillation of said axle about said longitudinal axis, and
- first sensor means integrated in said control means designed to supply a signal indicative of the angular position of said operating arm about said vertical axis with respect to said bottom chassis.

The vehicle is characterized in that said first sensor means comprises a first conductive element and a second conductive element, which are mobile with respect to one another in accordance with the relative rotation between said operating arm and said bottom chassis about said vertical axis; said first and second conductive elements being electrically set in contact when the angular position of said operating arm is located within a pre-defined angle of safety with respect to said longitudinal axis.

Preferably, said control means comprise first automatic activation means for activating said blocking means and for angularly blocking said axle according to the angular position detected by said first sensor means. The vehicle further comprises second sensor means designed to detect braking of said wheels, whilst said control means comprise second automatic activation means for activating said blocking means automatically and for angularly blocking said axle in the presence of said braking.

The invention will now be described further, by way of example, with reference to the accompanying drawings,
in which:
- Figure 1 is a schematic plan view of a preferred embodiment of the wheeled vehicle equipped with an oscillating axle, according to the present invention;
- Figure 2 is a schematic and partial front view of the vehicle of Figure 1; and
- Figure 3 is a partial electrical and hydraulic diagram of the vehicle illustrated in the preceding figures.

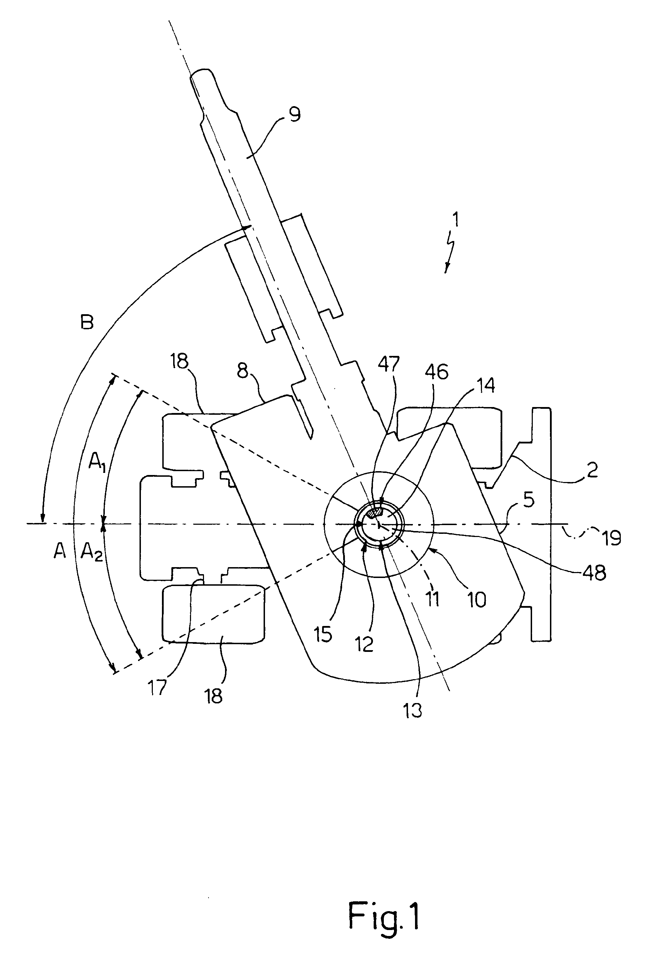

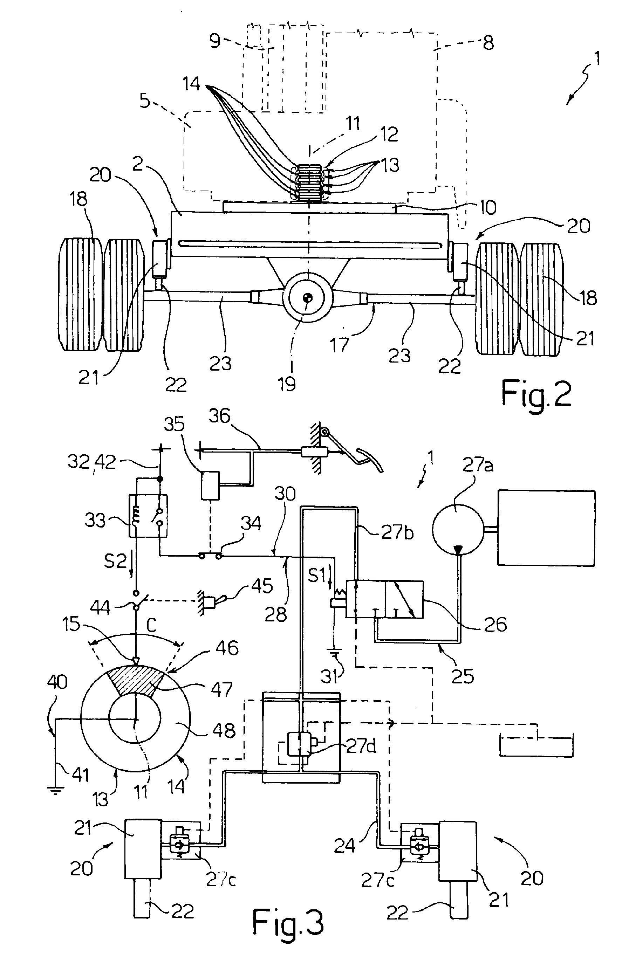

In Figures 1 and 2, the reference number 1 designates an earth-moving wheeled vehicle comprising a bottom chassis 2 and a top chassis or turret 5. The top chassis is provided with a driving cab 8 and an operating arm 9 of a known type, for example an excavating arm, which extends in cantilevered fashion from the chassis 5.

The two chassis 2 and 5 are coupled together by means of a rotating thrust-bearing device 10 (illustrated schematically and partially in Figure 2), which enables a rotation of the chassis 5 relative to the chassis 2 about a vertical axis 11. The coupling between the two chassis comprises an electrical rotating joint 12 for transmitting a plurality of electrical signals between the cab 8 and the electrical and electronic members carried by the chassis 2, and vice versa, during relative rotation of the chassis 2, 5 about the axis 11. The joint 12 comprises a plurality of electrical contacts 13, which are each associated with a corresponding signal to be transmitted. The contacts 13 consist on the one hand of respective disks 14 fixed to one of the chassis 2, 5 and coaxial with respect to one another along the axis 11 and on the other hand of respective brushes 15, which are fixed to the other between the chassis 2, 5 and each of which slides in electrical contact against a corresponding disk 14.

With reference to Figure 2, the vehicle 1 further comprises a front axle 17, which carries the front wheels 18 and is coupled to the chassis 2 (in a known way and not described in detail herein) to enable oscillation about a longitudinal axis 19 parallel to a direction of advance of the vehicle 1. This consequently enables the vehicle 1 to adapt to the irregularities of the terrain during the vehicle's advance over the ground surface.

Oscillation of the axle 17 can be blocked by means of two hydraulic cylinders 20 of conventional design, which extend in a direction transverse to the axle 17. Each of the cylinders 20 comprises a corresponding cylinder housing 21 fixed to the chassis 2 and a corresponding rod 22, which can slide with respect to the housing 21 and is set resting, at its end, against a corresponding axle shaft 23 of the axle 17. The cylinders 20 define respective rear chambers (not illustrated), which communicate with one another through a hydraulic line 24. The flow of oil from one cylinder 20 to the other through the line 24 is controlled by a hydraulic control unit 25 of a known type and schematically illustrated in Figure 3.

The control unit 25 is carried by the chassis 2 and comprises a bi-stable three-way solenoid valve 26, which controls activation and deactivation of the blocking of the cylinders 20 according to an excitation current S1. In particular, the solenoid valve 26 controls the oil sent by a pump 27a into a hydraulic line 27b, from which a pressure signal is picked up for driving two bi-stable valves 27c, each of which is carried by a corresponding cylinder housing 21.

When the current S1 is such as to energize the solenoid valve 26, the oil flows from the pump 27a into the line 27b thereby piloting both of the valves 27c to open. As a result, the rear chambers of the cylinders 20 communicate with one another through the lines 24, basically as if it were a closed circuit. In addition thereto, a valve 27d controls a flow of oil from the line 27b to the line 24 to compensate for possible leakages of oil and to maintain the pressure of the line 24 at approximately 5 bar. Under this operating condition, therefore, the rods 22 can translate with respect to the cylinder housings 21, and the axle 17 is thus free to oscillate about the axis 19.

Conversely, when the current S1 is equal to zero, the solenoid valve 26 inhibits passage of oil into the hydraulic line 27b, so that the valves 27c, in the absence of a pilot pressure, close the rear chambers of the cylinders 20. Under this operating condition, therefore, the rods 22 are blocked with respect to the cylinder housings 21 on account of the counter pressure of the oil and, consequently, the axle 17 remains angularly blocked about the axis 19 with respect to the chassis 2.

With reference to Figure 3, the current S1 is generated in an electrical control circuit 28 comprising a wire 30, which transmits the current S1 to the solenoid valve 26 and comprises a terminal 31 connected to ground, a voltage-supplied terminal 32, a relay 33, and a switch 34 set in serial relation to one another. The switch 34 is normally closed and is controlled by a pressure transducer 35 incorporated in a hydraulic wheel-braking system 36, for automatically interrupting the wire 30 and thus activating blocking of the cylinders 20 when the transducer 35 detects a condition of braking of the wheels 18.

The relay 33 on the other hand is normally open and may be switched by a current S2 generated in an electrical line 40 forming part of the circuit 28 and set in parallel to the line 30. The line 40 comprises a terminal 41 connected to ground, a voltage-supplied terminal 42 coinciding with the terminal 32, and a switch 44, which may be switched by the driver of the vehicle 1 by means of a manual-control member 45, for example a push-button, located in the cab 8.

The line 40 runs from the cab 8 to the chassis 2 through the joint 12 and thus comprises one of the electrical contacts 13 of the joint 12. This contact 13 comprises an angular sensor 46, which is set in series to the switch 44 and opens the line 40 when the angle B of the arm 9 about the axis 11 with respect to the axis 19 exits from an angular-safety range A. This range A is defined by two extreme angles A1 and A2 measured on opposite sides of the axis 19 and predetermined in such a way as to prevent the cantilevered position of the arm 9 from causing the vehicle 1 to turn over, when the axle 17 is free to oscillate about the axis 19.

In particular, the sensor 46 comprises a conductive angular sector 47 provided on the disk 14 and having an angular amplitude C equal to the range A, whilst the remaining part of the disk 14, indicated by the sector 48, is not conductive.

In use, the driver manually activates the circuit 28 by closing it via the switch 44. During rotation of the chassis 5 relative to the chassis 2, if the angular position of the arm 9 about the axis 11 is within the range A, the brush 15 slides in contact with the sector 47, keeping the line 40 automatically closed, and consequently enables passage, between the terminals 41, 42, of the current S2, which energizes and closes the relay 33.

In the case where the switch 34 is in the meantime in a closed position, the closing of the circuit by the relay 33 enables passage between the terminals 41, 42 of the current S1, which energizes the solenoid valve 26 for maintaining the axle 17 free to oscillate about the axis 19.

Conversely, when the angular position of the arm 9 exits from the range A, the brush 15 comes into contact with the sector 48, and the line 40 consequently opens. On account of the absence of the current S2, the relay 33 switches to automatic opening, so that the line 30 opens, the current S1 goes to zero, and hence the solenoid valve 26 switches so as to activate blocking of the cylinders 20.

When the driver starts braking the wheels so as to engage the so-called "work brake", the transducer 35 issues a command for switching the switch 34 to an open position, so that the line 30 opens, the current S1 goes to zero, resulting in the solenoid valve 26 switching automatically to activate blocking of the cylinders 20. Once braking terminates, the switch 34 switches automatically, again closing the line 30.

Independently of the automatic activation and deactivation of the cylinders 20 caused either by the relay 33 or the switch 34, if the driver switches the switch 44 to the open position, the circuit 28 remains inactive and the cylinders 20 are blocked.

From the foregoing it clearly is understood how the circuit 28 enables detection of an angular safety position of the arm 9 with respect to the chassis 2 and generation of a current S1 that enables control of activation or de-activation of the cylinders 20 in a precise and reliable way. In particular, the blocking of the cylinders 20 is activated automatically by the circuit 28, so that the vehicle 1 is able to carry out digging operations in safety, regardless of the sensitivity and degree of attention of the driver in identifying possible risks of the vehicle 1 turning over.

In addition, once the circuit 28 has been activated by closing the switch 44, the driver operates in relatively comfortable conditions during digging operations, in so far as he only needs to pay attention to braking of the vehicle 1 and does not need to switch other manual controls repeatedly for blocking and releasing the cylinders 20.

Supplementary, the power unit 25 operates in safety conditions, in as much as it always keeps the cylinders 20 blocked in the absence of excitation of the solenoid valve 26.

The circuit 28 is moreover relatively simple, in that the relay 33 and the switch 34 are set in series on the same line 30 that controls the solenoid valve 26 directly. The simplicity of the circuit 28 is provided above all by the particular constructional solution of the sensor 46, which is integrated in the joint 12 and exploits the fact that the contacts 13 provided with disks 14 and brushes 15, which are completely conductive, already exist in earth-moving vehicles of a known type. All is needed is, as compared to known solutions, to have just one conductive sector 47 of predetermined amplitude and angular position on a disk 14 in order to obtain an electrical contact that opens the circuit automatically when the arm 9 exceeds the angles A1 and A2 and exits from the safety range A.

Finally, from the foregoing it will be clear that modifications and variations can be made to the vehicle 1 described herein with reference to the attached figures, without thereby departing from the scope of protection of the present invention.

In particular, the sensor 46 could be set directly on the line 40 and/or control directly the solenoid valve 26, in so far as, in addition to supplying a signal indicative of the angular position of the arm 9, it can define directly an electrical-activation contact that opens the circuit automatically when the arm 9 exits from the safety range A.

The sensor 46 could be different from the one that has been described purely by way of example. For instance it could provide a point detection of the two angles A1 and A2 or else a precise detection of the angle of relative rotation between the chassis 2, 5. In addition, the circuit 28 that controls the power unit 25 could be different from the one that is illustrated schematically herein, and/or could be carried entirely by the chassis 5.

## Claims

1. A wheeled vehicle (1), comprising:
- a bottom chassis (2);
- a top chassis (5), coupled to said bottom chassis (2) in a manner as to be able to turn about a vertical axis (11) and equipped with an operating arm (9);
- an axle (17), coupled to said bottom chassis (2) for oscillating movement about a longitudinal axis (19) of the vehicle (1);
- blocking means (20), provided between said bottom chassis (2) and said axle (17) and operable, when activated, to angularly block said axle (17) about said longitudinal axis (19) with respect to said bottom chassis (2);
- control means (28) for activating said blocking means (20) and inhibiting oscillation of said axle (17) about said longitudinal axis (19); and
- first sensor means (46) integrated in said control means (28) designed to supply a signal (S2) indicative of the angular position (B) of said operating arm (9) about said vertical axis (11) with respect to said bottom chassis (2); and
**characterized in that** said first sensor means (46) comprises a first conductive element (47) and a second conductive element (15), which are mobile with respect to one another in accordance with the relative rotation between said operating arm (9) and said bottom chassis (2) about said vertical axis (11); said first and second conductive elements (47, 15) being electrically set in contact when the angular position of said operating arm (9) is located within a pre-defined angle of safety (A) with respect to said longitudinal axis (19).

2. A vehicle according to claim 1, **characterized in that** said control means (28) comprises first automatic activation means (33) to activate said blocking means (20) in accordance with said signal (S2).

3. A vehicle according to claim 1 or 2, **characterized in that** the vehicle further comprises second sensor means (35) operable to detect braking of the vehicle wheels, and **in that** said control means (28) comprises second automatic activation means (34) operable to activate said blocking means (20) automatically in the presence of said braking.

4. A vehicle according to claim 3 when appended to claim 2, **characterized in that** said first and second automatic activation means (33, 34) are disposed in series with respect to one another.

5. A vehicle according to claim 4, **characterized in that** said control means (28) further comprise an electrical control circuit (28); said first and second automatic activation means (33, 34) comprising respective electrical contacts operable to be switched to an open state so as to open said electrical control circuit (28) and activate said blocking means (20).

6. A vehicle according to claim 5, **characterized in that** said first automatic activation means (33) comprises a relay (33), operable to be switched by said signal (S2).

7. A vehicle according to claim 5 or 6, **characterized in that** said second sensor means (35) comprises a pressure transducer (35) disposed in a system for braking the vehicle.

8. A vehicle according to any one of the claims 5 to 7, **characterized in that** said control circuit (28) comprises a manual-control switch (44), which may be switched to an open position by a driver of the vehicle (1) for opening the control circuit (28) and activating said blocking means (20).

9. A vehicle according to any one of the preceding claims, **characterized in that** the vehicle comprises a joint (12) disposed between said top chassis (5) and said bottom chassis (2) and designed to transmit a plurality of electrical signals between said top chassis (5) and said bottom chassis (2) during their relative rotation about said vertical axis (11); said first sensor means (46) being incorporated into said joint (12).

10. A vehicle according to claim 9, **characterized in that** said joint (12) comprises a set of electrical contacts (13), each comprising a conductive brush (15) carried by one of said top chassis (5) and said bottom chassis (2), and a disk (14), which is carried by the other one of said top chassis (5) and said bottom chassis (2), said disk being operable to turn with respect to said brush (15) coaxially to said vertical axis (11); said first sensor means (46) comprising one of said brushes (15) and said conductive portion (47) of a corresponding said disk (14).

11. A vehicle according to claim 10, **characterized in that** said conductive portion (37) is defined by a circular sector (47) of said disk (14); the remaining part (48) of said disk (14) being on-conductive.

## Patentansprüche

1. Radfahrzeug (1) mit:
- einem unteren Fahrgestell (2);
- einem oberen Fahrgestell (5), das mit dem unteren Fahrgestell (2) in einer derartigen Weise gekoppelt ist, dass es sich um eine vertikale Achse (11) drehen kann, und das mit einem Arbeitsarm (9) ausgerüstet ist;
- einer Achse (17), die mit dem unteren Fahrgestell (2) für eine Schwingungsbewegung um eine Längsachse (19) des Fahrzeuges (1) gekoppelt ist;
- Blockierungseinrichtungen (20), die zwischen dem unteren Fahrgestell (2) und der Achse (17) vorgesehen sind und bei ihrer Aktivierung betreibbar sind, um die Achse (17) um die Längsachse (19) bezüglich des unteren Fahrgestells (2) zu blockieren;
- Steuereinrichtungen (28) zum Aktivieren der Blockierungseinrichtungen (20) und zum Sperren der Schwingung der Achse (17) um die Längsachse (19); und
- eine erste Sensoreinrichtung (46), die in die Steuereinrichtung (28) integriert und so ausgelegt ist, dass sie ein Signal (S2) liefert, das die Winkelposition (B) des Arbeitsarmes (9) um die vertikale Achse (11) gegenüber dem unteren Fahrgestell (2) anzeigt; und
**dadurch gekennzeichnet, dass** die erste Sensoreinrichtung (46) ein erstes leitendes Element (47) und ein zweites leitendes Element (15) umfasst, die bezüglich einander entsprechend der Relativdrehung zwischen dem Arbeitsarm (9) und dem unteren Fahrgestell (2) um die vertikale Achse (11) beweglich sind; wobei die ersten und zweiten leitenden Elemente (47, 15) elektrisch miteinander in Kontakt gebracht werden, wenn die Winkelstellung des Arbeitsarmes (9) innerhalb eines vordefinierten Sicherheitswinkels (A) gegenüber der Längsachse (19) liegt.

2. Fahrzeug nach Anspruch 1, **dadurch gekennzeichnet, dass** die Steuereinrichtung (28) erste automatische Aktivierungseinrichtungen (33) zur Aktivierung der Blockierungseinrichtungen (20) in Abhängigkeit von dem Signal (S2) umfasst.

3. Fahrzeug nach Anspruch 1 oder 2, **dadurch gekennzeichnet, dass** das Fahrzeug weiterhin zweite Sensoreinrichtungen (35) umfasst, die zur Feststellung eines Bremsens der Fahrzeugräder betreibbar sind, und dass die Steuereinrichtung (28) eine zweite automatische Aktivierungseinrichtung (34) umfasst, die zur Aktivierung der Blockierungseinrichtungen (20) automatisch bei Vorliegen der Bremsung betreibbar ist.

4. Fahrzeug nach Anspruch 3 unter Rückbeziehung auf Anspruch 2, **dadurch gekennzeichnet, dass** die ersten und zweiten automatischen Aktivierungseinrichtungen (33, 34) in Serie miteinander angeordnet sind.

5. Fahrzeug nach Anspruch 4, **dadurch gekennzeichnet, dass** die Steuereinrichtung (28) weiterhin eine elektrische Steuerschaltung (28) umfasst, wobei die ersten und zweiten automatischen Aktivierungseinrichtungen (33, 34) jeweilige elektrische Kontakte umfassen, die zum Schalten auf einen offenen Zustand betreibbar sind, um die elektrische Steuerschaltung (28) zu öffnen und die Blockiereinrichtungen (20) zu aktivieren.

6. Fahrzeug nach Anspruch 5, **dadurch gekennzeichnet, dass** die ersten automatischen Aktivierungseinrichtungen (33) ein Relais (33) umfassen, das zum Schalten durch das Signal (S2) betreibbar ist.

7. Fahrzeug nach Anspruch 5 oder 6, **dadurch gekennzeichnet, dass** die zweite Sensoreinrichtung (35) einen Druckwandler (35) umfasst, der in einem System zum Bremsen des Fahrzeuges angeordnet ist.

8. Fahrzeug nach einem der Ansprüche 5 bis 7, **dadurch gekennzeichnet, dass** die Steuerschaltung (28) einen Schalter (44) mit manueller Betätigung umfasst, der durch einen Fahrer des Fahrzeuges (1) in einem offenen Zustand geschaltet werden kann, um die Steuerschaltung (28) zu öffnen und die Blockiereinrichtungen (20) zu aktivieren.

9. Fahrzeug nach einem der vorhergehenden Ansprüche, **dadurch gekennzeichnet, dass** das Fahrzeug eine Drehkupplung (12) umfasst, die zwischen dem oberen Fahrgestell (5) und dem unteren Fahrgestell (2) angeordnet und zur Übertragung einer Vielzahl von elektrischen Signalen zwischen dem oberen Fahrgestell (5) und dem unteren Fahrgestell (2) während ihrer Relativdrehung um die vertikale Achse (11) ausgelegt ist, wobei die erste Sensoreinrichtung (46) in diese Drehkupplung (12) eingefügt ist.

10. Fahrzeug nach Anspruch 9, **dadurch gekennzeichnet, dass** die Drehkupplung (12) einen Satz von elektrischen Kontakten (13) umfasst, die jeweils einen leitenden Schleifkontakt (15), der von dem oberen Fahrgestells (5) oder dem unteren Fahrgestells (2) getragen wird, und eine Scheibe (14) umfasst, die von dem unteren Fahrgestell (2) oder dem oberen Fahrgestell (5) getragen wird, wobei die Scheibe so betreibbar ist, dass sie sich gegenüber dem Schleifkontakt (15) koaxial zu der vertikalen Achse (11) dreht; wobei die erste Sensoreinrichtung (46) einen der Schleifkontakte (15) und den leitenden Teil (47) der entsprechenden der Scheiben (14) umfasst.

11. Fahrzeug nach Anspruch 10, **dadurch gekennzeichnet, dass** der leitende Teil (37) durch einen Kreissektor (47) der Scheibe (14) gebildet ist, wobei der verbleibende Teil (48) der Scheibe nicht leitend ist.

## Revendications

1. Véhicule sur roues (1), qui comprenant :
- un châssis inférieur (2) ;
- un châssis supérieur (5), couplé audit châssis inférieur (2) de manière à pouvoir tourner autour d'un axe vertical (11) et doté d'un bras de commande (9) ;
- un essieu (17), couplé audit châssis inférieur (2) pour un mouvement d'oscillation autour d'un axe longitudinal (19) du véhicule (1) ;
- un moyen de blocage (20), disposé entre ledit châssis inférieur (2) et ledit essieu (17) et qui peut être utilisé, lorsqu'il est activé, pour bloquer angulairement ledit essieu (17) autour dudit axe longitudinal (19) par rapport audit châssis inférieur (2) ; et
- un moyen de commande (28) destiné à activer ledit moyen de blocage (20) et à inhiber l'oscillation dudit essieu (17) autour dudit axe longitudinal (19) ; et
- un premier dispositif détecteur (46) intégré audit moyen de commande (28) conçu pour émettre un signal (s2) indiquant la position angulaire (B) dudit bras de commande (9) autour dudit axe vertical (11) par rapport audit châssis inférieur (2) ; et
**caractérisé en ce que** ledit premier dispositif détecteur (46) comprend un premier élément conducteur (47) et un second élément conducteur (15) qui sont mobiles l'un par rapport à l'autre en fonction de la rotation relative entre ledit bras de commande (9) et ledit châssis inférieur (2) autour dudit axe vertical (11) ; lesdits premier et second éléments conducteurs (47, 15) sont électriquement mis en contact lorsque la position angulaire dudit bras de commande (9) se situe à l'intérieur d'un angle de sécurité prédéfini (A) par rapport audit axe longitudinal (19).

2. Véhicule sur roues selon la revendication 1, **caractérisé en ce que** ledit moyen de commande (28) comprend un premier moyen d'activation automatique (33) pour activer ledit moyen de blocage (20) en fonction dudit signal (S2).

3. Véhicule sur roues selon la revendication 1 ou 2, **caractérisé en ce que** le véhicule comprend également un second moyen de détection (35) capable de détecter le freinage des roues du véhicule, et **caractérisée en ce que** ledit moyen de commande (28) comprend un second moyen d'activation automatique (34) capable d'activer automatiquement ledit moyen de blocage (20) en présence dudit freinage.

4. Véhicule selon la revendication 3, lorsqu'elle se rapporte à la revendication 2, **caractérisé en ce que** lesdits premier et second moyens d'activation automatique (33, 34) sont montés en série l'un par rapport à l'autre.

5. Véhicule selon la revendication 4, **caractérisé en ce que** lesdits moyens de commande (28) comprennent également un circuit de commande électrique (28) ; lesdits premier et second moyens d'activation automatique (33, 34) comprennent des contacts électriques correspondants pouvant être placés dans une position ouverte de manière à ouvrir ledit circuit de commande électrique (28) et activer ledit moyen de blocage (20).

6. Véhicule selon la revendication 5, **caractérisé en ce que** ledit premier moyen d'activation automatique (33) comprend un relais (33) qui peut être activé par ledit signal (S2).

7. Véhicule selon la revendication 5 ou 6, **caractérisé en ce que** ledit second moyen de détection (35) comprend un transducteur de pression (35) disposé dans un système de freinage du véhicule.

8. Véhicule selon l'une quelconque des revendications 5 à 7, **caractérisé en ce que** ledit circuit de commande (28) comprend un commutateur de commande manuelle (44), qui peut être amené dans une position ouverte par le conducteur du véhicule (1) pour ouvrir le circuit de commande (28) et activer ledit moyen de blocage (20).

9. Véhicule selon l'une quelconque des revendications précédentes, **caractérisé en ce que** le véhicule comprend une articulation (12) située entre ledit châssis supérieur (5) et ledit châssis inférieur (2) et conçue pour transmettre une pluralité de signaux électriques entre ledit châssis supérieur (5) et ledit châssis inférieur (2) pendant leur rotation relative autour dudit axe vertical (11), ledit premier moyen de détection (46) étant intégré à ladite articulation (12).

10. Véhicule selon la revendication 9, **caractérisé en ce que** ladite articulation (12) comprend un ensemble de contacts électriques (13), chacun comprenant un balai conducteur (15) supporté par l'un des châssis supérieur (5) et inférieur (2), et un disque (14), supporté par l'autre châssis entre le châssis supérieur (5) et le châssis inférieur (2), chaque disque pouvant tourner par rapport audit balai (15) coaxialement audit axe vertical (11) ; ledit premier moyen de détection (46) comprend l'un desdits balais (15) et ladite partie conductrice (47) d'un disque correspondant (14).

11. Véhicule selon la revendication 10, **caractérisé en ce que** ladite partie conductrice (37) est définie par un secteur circulaire (47) dudit disque (14), le reste (48) dudit disque (14) n'étant pas conducteur.
